# EUROPEAN PATENT SPECIFICATION

(11) **EP 1 896 220 B1**
(45) Date of publication and mention of the grant of the patent: **05.11.2008**
(21) Application number: 06744565.0
(22) Date of filing: 25.04.2006
(51) Int. Cl.: B25C 1/08, F17C 13/04, F16L 21/02

(54) **SEALING CONNECTORAND ASSEMBLY CONSISTING OF A TRANSMISSION MEMBER, A GAS CARTRIDGE AND AN ADAPTER COMPRISING THE CONNECTOR**
DICHTUNGSANSCHLUSS UND AUS EINEM KRAFTÜBERTRAGUNGSGLIED BESTEHENDE ANORDNUNG , GASPATRONE UND DEN VERBINDER UMFASSENDER ADAPTER
RACCORD D'ETANCHEITE ET ENSEMBLE CONSTITUE D'UN ELEMENT DE TRANSMISSION, CARTOUCHE DE GAZ ET ADAPTATEUR COMPRENANT LE RACCORD

(30) Priority: 26.04.2005 FR 0504157
(43) Date of publication of application: 12.03.2008
(73) Proprietor: SOCIETE DE PROSPECTION ET D'INVENTIONS TECHNIQUES SPIT, 26501 Bourg-Les-Valence Cédex (FR)
(72) Inventor: HERELIER, Patrick, F-07500 Saint-Jean-De-Muzols (FR)
(74) Representative: Bloch, Gérard
(86) International application number: PCT/IB2006/001012
(87) International publication number: WO 2006/114693

(56) References cited:
- EP-A- 1 197 299
- EP-A- 1 468 788
- DE-U1- 20 201 697
- DE-U1- 20 202 886
- FR-A- 2 833 685
- FR-A- 2 870 920
- US-A- 4 483 474
- US-A1- 2003 111 135
- US-A1- 2003 111 136
- US-B1- 6 217 085

## Description

The invention arises from a problem encountered with sealing connectors in gas fastening devices mounted between the gas cartridge and the solenoid valve for filling the combustion chambers of these devices in order to ensure sealing of the duct extending through the outlet and filling fittings of the cartridge and the solenoid valve. The term "solenoid valve" is used here for the sake of simplicity, although it could also be a simple mechanical valve and, more generally, any other member for transmitting the gas from the cartridge towards the combustion chamber.

US 6 217 085, considered as closest prior art, discloses a sealing connector according to the preamble of claim 1.

Possible fastening devices are. e.g. nail drivers for applications with wood.

The connectors in question, e.g. such as those described in French patent applications FR 0405605 and FR 0407208 not yet published at the time of filing this application, include a double internal sealing sleeve for receiving the two fittings made of a flexible material, with a generally central transverse annular partition for dimensional adjustment, and an external slide in which the double sleeve is mounted.

The slide ensures that the shape or morphology of the flexible double sleeve is maintained and allows the connector to slide in the adapter of the cartridge, by virtue of which, when the cartridge is removed from the device, the sleeve made of flexible material does not remain "stuck" against the adapter and does not hold the fitting of the cartridge in the gas exhaust position.

The problem encountered by the Applicant is linked to the risk, on the one hand, that the fitting of the cartridge will pierce the central partition for dimensional adjustment made of flexible material and, on the other hand, that this central partition will be deformed to such an extent that it will obstruct the duct for the passage of gas.

In the end, the ideal solution would be to propose a sealing connector made of one single material sufficiently flexible to ensure sealing between the two fittings, but sufficiently rigid to prevent the central partition from being damaged or deformed and blocking one of the fittings for the passage of gas.

Because no material of this kind is available today, at least at an acceptable cost, the Applicant proposes his invention.

This application thus relates to a sealing connector for ensuring sealing between a gas cartridge having an outlet fitting and a transmission member for filling a combustion chamber of a gas fastening device having an inlet fitting with gas, including two internal sealing sleeves for receiving the two fittings, at least one of which is made of flexible material, with, at the bottom of this sleeve, a flexible transverse annular partition for dimensional adjustment, and an external slide, the connector being characterised in that it is provided at the bottom of the other of the two sleeves with a rigid transverse annular partition to serve as a support for a fitting.

When the outlet fitting of the cartridge is engaged in the sleeve on the side of the rigid partition, there is no risk that it will pierce the flexible partition for dimensional adjustment, by virtue of the rigid partition inserted between it and the flexible partition and against which it bears.

In the preferred embodiment of the connector of the invention, the rigid partition is integral with the slide.

The two flexible and rigid partitions are advantageously contiguous.

In a first embodiment, the two sleeves for receiving the two fittings are joined together to form a double internal sealing sleeve formed in one piece from flexible material.

In this case, it is advantageous that the double sleeve made of flexible material is an injection-moulded part and the rigid supporting partition is provided with orifices for the passage of the injection-moulded material of the double sleeve.

In a variant embodiment, the sleeve at the bottom of which the rigid transverse annular partition is situated forms one single piece made of rigid material with the external slide, the internal sleeve extending inside the external slide with play.

The invention also relates to an assembly consisting of a transmission member for filling the combustion chamber of a gas fastening device with gas, a gas cartridge, an adapter and, mounted in the adapter, a connector for providing sealing between the transmission member and the cartridge, the sealing connector being the connector of the invention.

The invention will be more readily understood with the aid of the following description of the preferred embodiment of the connector of the invention and a variant, with reference to the accompanying drawings, in which:
- Figure 1: is a perspective view of an assembly consisting of the solenoid valve of a fastening device, a gas cartridge and the connector of the invention;
- Figure 2: is an axial section of the connector of the assembly of Figure 1;
- Figure 3: is a transverse section of the connector of Figure 2 along the line III-III;
- Figure 4: is a diagrammatic axial section of a first variant embodiment of the connector of the invention, and
- Figure 5: is a diagrammatic axial section of a second variant embodiment of the connector of the invention.

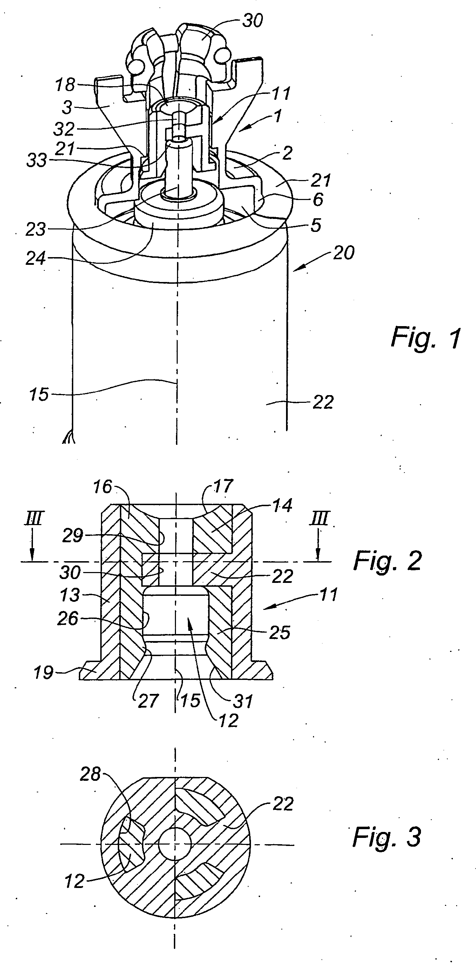

The connector which will now be described with reference to Figures 1 to 3 is intended to ensure sealing between a propellant cartridge 20 and a transmission member which is a solenoid valve 30 for filling the combustion chamber of a gas fastening device. The reference numeral 30 does not in fact designate the solenoid valve itself in the drawings, but hooking legs for the adapter, which will be described hereinafter, for connecting the solenoid valve and the cartridge.

A fastening device for fastening fastening elements by means of a piston driven by compressed gas comprises an internal combustion engine comprising a combustion chamber intended to be supplied with compressed gas from a gas cartridge 20 in order to drive the piston itself intended to drive the fastening elements.

In this particular example, a connecting adapter 1 intended to connect the solenoid valve 30 for the admission of the compressed gas into the combustion chamber of the fastening device and the compressed gas cartridge 20 is provided.

The cartridge 20 of generally cylindrical shape is provided in an internal casing with the compressed gas in the liquid state and between the internal casing and an external casing 22 with a propellant. A circular edge 21 forms a continuation of the external cyl indrical wall of the cartridge 20, at one of the ends of the latter. A male outlet fitting 23 connected to the internal casing projects from the cartridge by means of a base 24 situated in the centre of the dish formed in the interior of the edge 21.

The solenoid valve 30 of generally cylindrical shape is provided at one of its ends with an inlet fitting 32 connected in the interior of the solenoid valve to an outlet fitting (not shown). This is in reality not exactly the inlet fitting of the solenoid valve, but an intermediate inlet fitting. The inlet fitting 32 is in this case a male fitting.

The adapter 1 serves as a support for the sealing connector 11 intended to receive the male outlet fitting 23 of the cartridge 20 and the male inlet fitting 32 of the solenoid valve 30.

The adapter 1. in this case formed in one piece from plastic, includes a flat, in this case, circular supporting base 2 supporting the chamber 3 for housing the sealing connector 11 open at both ends and extending along an axis 15 perpendicular to the supporting base 2 on one side of the latter.

A cylindrical skirt 5 having an axis 15 is connected to the supporting base 2 perpendicularly to the supporting base 2 on the side opposite that of the chamber 3. The external diameter of the skirt 5 is substantially equal to the internal diameter of the edge 21 of the fuel cartridge 20. The skirt 5 is moreover provided with a circumferential rib forming a boss 6 intended to engage with the internal wall of the edge 21.

The sealing connector 11 includes an internal sealing component 12 and an external slide component 13. The internal sealing component 12 is in this case a double sleeve formed in one piece intended to receive two sides of the two male fittings 23, namely the outlet fitting 23 of the cartridge and the inlet fitting 32 of the solenoid valve. The double sleeve 12 includes a transverse annular partition 14 for dimensional adjustment in fact disposed at the bottom of one of the two sleeves of the double sleeve, the latter 16 being intended to receive the inlet fitting 32 of the solenoid valve. The partition 14 is designed as a dish 17 on the side of the opening of the sleeve 16 in order to receive a spherical hooking portion 18 for the inlet fitting (intermediate fitting) 32.

The double sleeve 12 with its partition 14 for dimensional adjustment is made of flexible material. e.g. a thermoplastic material which can be vulcanised and injected and, more generally, an injectable flexible polymer.

The external slide component is a slide 13 in which the double sleeve 12 extends without play, intended to hold the shape of the flexible double sleeve 12. The slide 13 has a generally tubular shape with, at one end, an external annular rim 19 for holding it in the adapter 1, in cooperation with an internal annular, shoulder 34 formed on the adapter. The slide 13 includes a transverse annular partition 22 in fact disposed at the bottom or the other 25 of the two sleeves of the internal double sleeve 12 intended to receive the outlet fitting 23 of the cartridge.

In this connection, an internal lip 27 cooperating with the external wall of the fitting 23 of the cartridge is formed on the internal wall 26 of the sleeve 25 close to the opening of the sleeve and its bevelled rim 31 in order to perfect the seal.

The slide 13 with its partition 22 is made of rigid material, e.g. a polypropylene. This rigid transverse partition 22 thus serves as a support for one of the fittings, in this case the outlet fitting 23 of the cartridge 20. When the fitting 23 of the cartridge is engaged in the sleeve 25, there is no risk that it will pierce the flexible partition 14 as the rigid partition 22 is inserted between the flexible partition 14 and the fitting 23.

The rigid transverse partition 22 is provided with orifices 28 for the passage of the material of the double sleeve 12, in this case injection-moulded material.

The central bore 29 extending through the flexible transverse partition 14, the bore 35 which forms a continuation thereof and extends through the rigid transverse partition 22 and the bore formed by the internal wall 26 of the sleeve 25 which forms a continuation of the bore 35 form the duct for the passage of gas of the sealing connector 11.

In the example of the connector shown in Figures 1-3, not only is the rigid transverse partition 22 integral with the slide 13, but the assembly formed by this partition and the slide is formed in one piece, in this case by injection moulding. In addition, it will be noted that the two transverse partitions, namely the flexible partition 14 and the rigid partition 22, are contiguous.

The connection of the inlet fitting 32 of the solenoid valve 30 and the outlet fitting 23 of the gas cartridge 20 will now be described.

In order to mount the adapter 1 on the cartridge 20, the fastening skirt 5 is inserted inside the edge 21 of the cartridge 20. The circumferential boss 6 is hooked and clipped on to the internal wall of the edge 21.

When the adapter 1 is fastened to the cartridge 20, the outlet fitting 23 of the cartridge 20 is guided by the bevelled rim 31 of the sleeve 25 until the edge 33 of the fitting 23 comes to bear against the rigid partition 22.

The adapter 1 is then slid on to the solenoid valve 30 and the connector 11 is slid on to the male inlet fitting 32 of the solenoid valve, the fitting engaging in the sleeve 16 of the connector 11 until the spherical portion 18 of the fitting is housed in the dish 17 of the sleeve 16 and therefore the adapter is hooked on to the fitting.

Finally, the connector 11 is mounted on the cartridge 20 and the solenoid valve 30 by a relative movement of translation of the three elements.

If, for some reason, it is desired to remove the cartridge 20 from its housing before it is empty, by virtue of the slide 13, the connector 11 will be retained in the adapter 1 and the outlet fitting 23 will return to its closing position prior to mounting.

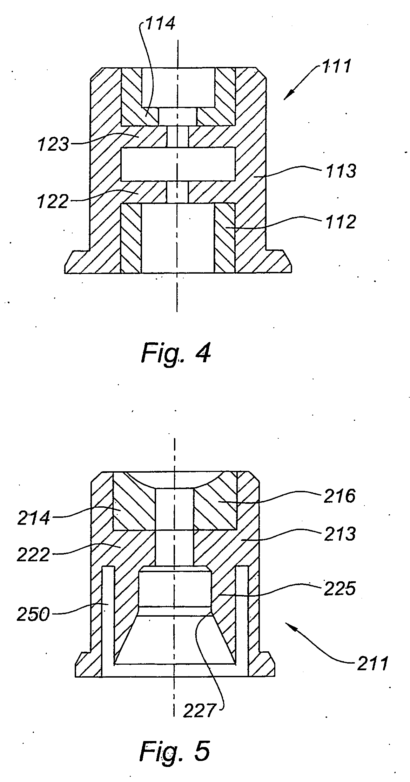

The first variant embodiment of the connector of Figure 4, shown in very diagrammatic form, also includes a tubular slide 113 in which a double sleeve 112 is housed, with its flexible transverse partition 114 for dimensional adjustment. The connector 111 of this Figure 4 is distinguished from that of Figures 1-3 in that the slide includes two rigid transverse partitions, one 122 serving as a support for the outlet fitting of the cartridge and the other 123, adjacent to the flexible transverse partition 114. to reinforce it. The two rigid transverse partitions 122, 123 are disposed at a short distance from one another.

In the second variant embodiment of Figure 5, the connector 211 includes two sleeves 216 and 225 for receiving the fittings, but not formed in one piece. One, namely the connector 216, is made of flexible material in order to receive the inlet fitting 32 of the transmission member (solenoid valve) 30. The other, namely the connector 225. is made of a rigid material in order to receive the outlet fitting 23 of the cartridge. The second rigid sleeve 225 has the particular feature that it is formed in one piece with the external slide 213. It extends inside the latter with, in this case, annular play 250. As for the rest, the flexible annular partition 214 for dimensional adjustment is once again situated at the bottom of the first flexible sleeve 216 and the rigid transverse annular partition 222 intended to serve as a support for the outlet fitting 23 of the cartridge is situated at the bottom of the second rigid sleeve 225.

As a result of the rigidity of the sleeve 225, sealing with the outlet fitting 23 of the cartridge is ensured essentially by an internal lip 227 cooperating witch the external wall of the fitting.

In the embodiment of Figure 5, the connector is obtained by simple assembly; with no need for overmoulding, as in the case of the connectors of the other figures.

## Claims

1. Sealing connector (1) for ensuring sealing between a gas cartridge (20) having an outlet fitting (23) and a transmission member (30) for filling a combustion chamber of a gas fastening device having an inlet fitting (32) with gas, including two internal sealing sleeves (12) for receiving the two fittings, at least one (216; 16) of which is made of flexible material, with, at the bottom of this sleeve (16; 216), a flexible transverse annular partition (14; 214) for dimensional adjustment, and an external slide (13; 213), the connector being **characterised in that** it is provided at the bottom of the other (25; 225) of the two sleeves with a rigid transverse annular partition (22; 222) to serve as a support for a fitting.

2. Connector according to claim 1, in which the rigid partition (22; 222) is integral with the slide (13; 213).

3. Connector according to one of claims 1 and 2, in which the two flexible (14; 214) and rigid (22: 222) partitions are contiguous.

4. Connector according to one of claims 1 to 3, in which the two sleeves (16, 25) are joined together to form a double internal sealing sleeve (12) formed in one piece from flexible material.

5. Connector according to claim 4. in which the double sleeve (12) made of flexible material is an injection-moulded part and the rigid supporting partition (22) is provided with orifices (28) for the passage of the injection-moulded material of the double sleeve (12).

6. Connector according to one of claims 4 and 5, in which the slide (113) includes two rigid transverse partitions (122. 123), one (122) to serve as a stop for a fitting and the other (123), adjacent to the flexible transverse partition (114) for dimensional adjustment, to reinforce it.

7. Connector according to one of claims 1 to 3, in which the sleeve (225) at the bottom of which the rigid transverse annular partition (222) is situated forms one single piece made of rigid material with the external slide (213).

8. Connector according to claim 7. in which the internal sleeve (225) formed in one piece with the slide (213) extends inside the slide (213) with play (250).

9. Assembly consisting of a transmission member (30) for filling the combustion chamber of a gas fastening device with gas, a gas cartridge (20), an adapter (1) and, mounted in the adapter, a connector (11; 111; 211) for providing sealing between the transmission member (30) and the cartridge (20), characterise in that the sealing connector is the connector of one of claims 1 to 8.

## Patentansprüche

1. Dichtungsverbinder (1) zur Gewährleistung der Dichtung zwischen einer Gaspatrone (20) mit einem Auslassanschlussstück (23) und einem Kraftübertragungsglied (30) zum Füllen einer Brennkammer einer gasbetriebenen Befestigungsvorrichtung, das ein Einlassanschlussstück (32) aufweist, mit Gas, umfassend zwei innere Dichtungshülsen (12) zur Aufnahme der beiden Anschlussstücke, von denen mindestens eine (216, 16) aus einem flexiblen Material besteht, mit einer flexiblen, ringförmigen Quertrennwand (14, 214) zur Maßeinstellung am Boden dieser Hülse (16; 216) und einem externen Gleitelement (13; 213),
**dadurch gekennzeichnet, dass** er am Boden der anderen (25; 225) der beiden Hülsen mit einer starren, ringförmigen Quertrennwand (22; 222) versehen ist, um als Stütze für ein Anschlussstück zu dienen.

2. Verbinder nach Anspruch 1, wobei die starre Trennwand (22; 222) integral mit dem Gleitelement (13, 213) ausgebildet ist.

3. Verbinder nach Anspruch 1 oder 2, wobei die beiden flexiblen (14; 214) und starren (22; 222) Trennwände aneinander angrenzend sind.

4. Verbinder nach einem der Ansprüche 1 bis 3, wobei die beiden Hülsen (16, 25) zusammengefügt sind, um eine innere Doppeldichtungshülse (12) zu bilden, die einstückig aus einem flexiblen Material hergestellt ist.

5. Verbinder nach Anspruch 4, wobei die aus einem flexiblen Material hergestellte Doppelhülse (12) ein spritzgegossenes Teil ist und die starre Stütztrennwand (22) mit Öffnungen (28) für das Passieren des spritzgegossenen Materials der Doppelhülse (12) versehen ist.

6. Verbinder nach Anspruch 4 oder 5, wobei das Gleitelement (113) zwei starre Quertrennwände (122, 123) enthält, von denen eine (122) als ein Anschlag für ein Anschlussstück dient und die andere (123) neben der flexiblen Quertrennwand (114) zur Maßeinstellung zu seiner Verstärkung.

7. Verbinder nach einem der Ansprüche 1 bis 3, wobei die Hülse (225), an deren Boden sich die starre ringförmige Quertrennwand (222) befindet, ein einziges Stück bildet, das mit dem externen Gleitstück (213) aus einem starren Material hergestellt ist.

8. Verbinder nach Anspruch 7, wobei sich die einstückig mit dem Gleitstück (213) ausgebildete innere Hülse (225) mit Spiel (250) innerhalb des Gleitstücks (213) erstreckt.

9. Anordnung, bestehend aus einem Kraftübertragungsglied (30) zum Füllen der Brennkammer einer gasbetriebenen Befestigungsvorrichtung mit Gas, einer Gaspatrone (20), einem Adapter (1) und, in dem Adapter angebracht, einem Verbinder (11; 111; 211) zur Bereitstellung von Dichtung zwischen dem Kraftübertragungsglied (30) und der Patrone (20), **dadurch gekennzeichnet, dass** der Dichtungsverbinder der Verbinder nach einem der Ansprüche 1 bis 8 ist.

## Revendications

1. Raccord étanche (1) destiné à assurer une étanchéité entre une cartouche (20) de gaz dotée d'un accessoire (23) de sortie et un organe (30) de transmission destiné à remplir de gaz une chambre de combustion d'un dispositif de fixation à gaz doté d'un accessoire (32) d'entrée, comprenant deux manchons internes (12) d'étanchéité destinés à recevoir les deux accessoires, au moins un (216 ; 16) de ceux-ci étant constitué d'un matériau souple avec, au fond dudit manchon (16 ; 216), une cloison annulaire transversale souple (14 ; 214) destinée à un ajustement dimensionnel, et une glissière externe (13 ; 213), le raccord étant **caractérisé en ce qu'**il est pourvu, au fond de l'autre (25 ; 225) des deux manchons, d'une cloison annulaire transversale rigide (22 ; 222) destinée à servir de support pour un accessoire.

2. Raccord selon la revendication 1, dans lequel la cloison rigide (22 ; 222) est intégrée à la glissière (13 ; 213).

3. Raccord selon l'une des revendications 1 et 2, dans lequel les deux cloisons souple (14 ; 214) et rigide (22 ; 222) sont contiguës.

4. Raccord selon l'une quelconque des revendications 1 à 3, dans lequel les deux manchons (16, 25) sont joints ensemble pour former un double manchon interne (12) d'étanchéité formé d'un seul tenant en matériau souple.

5. Raccord selon la revendication 4, dans lequel le double manchon (12) constitué de matériau souple est une pièce moulée par injection et la cloison rigide (22) de soutien est pourvue d'orifices (28) pour le passage du matériau moulé par injection du double manchon (12).

6. Raccord selon l'une des revendications 4 et 5, dans lequel la glissière (113) comprend deux cloisons transversales rigides (122, 123), l'une (122) destinée à servir de butée pour un accessoire et l'autre (123), adjacente à la cloison transversale souple (114) destinée à l'ajustement dimensionnel, à la renforcer.

7. Raccord selon l'une des revendications 1 à 3, dans lequel le manchon (225) au fond duquel est située la cloison annulaire transversale rigide (222) forme une seule pièce constituée de matériau rigide avec la glissière externe (213).

8. Raccord selon la revendication 7, dans lequel le manchon interne (225) formé d'un seul tenant avec la glissière (213) s'étend à l'intérieur de la glissière (213) avec un jeu (250).

9. Ensemble constitué d'un organe (30) de transmission destiné à remplir de gaz une chambre de combustion d'un dispositif de fixation à gaz, une cartouche (20) de gaz, un adaptateur (1) et, monté dans l'adaptateur, un raccord (11 ; 111 ; 211) destiné à donner une étanchéité entre l'organe (30) de transmission et la cartouche (20), **caractérisé en ce que** le raccord étanche est le raccord selon l'une des revendications 1 à 8.
